Europäisches Patentamt

European Patent Office

Office européen des brevets

(19)

(11) Veröffentlichungsnummer: **0 051 137**
**B1**

(12) **EUROPÄISCHE PATENTSCHRIFT**

(45) Veröffentlichungstag der Patentschrift:
**18.04.84**

(51) Int. Cl.³: **B 60 T 8/22**

(21) Anmeldenummer: **81107338.6**

(22) Anmeldetag: **17.09.81**

(54) Vorrichtung zum Einstellen eines mechanisch gesteuerten Bremskraftreglers.

(30) Priorität: **03.11.80 DE 3041248**

(43) Veröffentlichungstag der Anmeldung:
**12.05.82 Patentblatt 82/19**

(45) Bekanntmachung des Hinweises auf die Patenterteilung:
**18.04.84 Patentblatt 84/16**

(84) Benannte Vertragsstaaten:
**AT CH DE FR GB IT LI NL SE**

(56) Entgegenhaltungen:
**DE - A - 2 809 998**
**DE - A - 2 855 295**
**DE - C - 743 722**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Fauck, Gerhard, Tiergartenstrasse 18,
D-3000 Hannover 71 (DE)**
Erfinder: **Kiel, Bernd-Joachim, Königsberger Strasse 7,
D-3050 Wunstorf 1 (DE)**
Erfinder: **Pohl, Wolfgang, Im Stühe 56,
D-3008 Garbsen 6 (DE)**
Erfinder: **Ulrich, Helmut, Schiergrund 19, D-3257 Springe
(DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

EP 0 051 137 B1

Vorrichtung eines mechanisch gesteuerten Bremskraftreglers

Die Erfindung betrifft eine Vorrichtung zum Justieren eines mechanisch gesteuerten lastabhängigen Bremskraftreglers gemäss dem Oberbegriff des Patentanspruchs 1.

Ein derartiger Bremskraftregler ist aus der DE-A-28 55 295 bekannt.

Zum Einstellen dieses Bremskraftreglers sind verschiedene Arbeitsgänge erforderlich.

Nach Einbau des Bremskraftreglers in die Bremsanlage eines Kraftfahrzeugs muss der Bremskraftregler an eine Prüfeinrichtung angeschlossenund die Steuerwelle des Bremskraftreglers von der die Kraftfahrzeugachse mit der Steuerwelle verbindenden Haltevorrichtung gelöst werden. Dann wird mittels der Steuerwelle der gewünschte Regelwert am Bremskraftregler eingestellt und die Haltevorrichtung wieder mit der Steuerwelle fest verbunden.

Wird der Bremskraftregler zwecks Durchführung von Wartungsarbeiten ausgebaut, so wird beim Wiedereinbau ein erneuter Einstellvorgang erforderlich.

Da der Einstellvorgang des Bremskraftreglers im am Fahrzeug montierten Zustand schwierig und auch nicht immer genau ist, liegt der Erfindung die Aufgabe zugrunde, den eingangs beschriebenen Bremskraftregler derart zu verbessern, dass Einstellarbeiten am in der Bremsanlage eines Fahrzeugs montierten Gerät entfallen.

Diese Aufgabe wird mit der im Patentanspruch 1 angegebenen Erfindung gelöst.

Vorteilhafte Ausgestaltungen und Weiterbildungen der Erfindung sind in den Unteransprüchen aufgezeigt.

Die Erfindung zeichnet sich insbesondere dadurch aus, dass die Einstellung des Bremskraftreglers vor der Montage in die Bremsanlage eines Fahrzeugs erfolgt, so dass bei der Montage auf Prüfeinrichtungen verzichtet werden kann. Des weiteren kann auf eine erneute Prüfung der Einstellung des Bremskraftreglers nach Wartungsarbeiten am Bremskraftregler verzichtet werden.

Die Erfindung wird nachstehend anhand der Abbildungen näher erläutert.

Es zeigen:

Fig. 1 einen Bremskraftregler im Schnitt mit einer am Gehäuse des Bremskraftreglers angeordneten Klemmeinrichtung zum Fixieren einer mit der Steuerwelle des Bremskraftreglers verbundenen Spannschelle,

Fig. 2 ausschnittsweise noch einmal die Steuerwelle mit der Fixiereinrichtung gemäss Fig. 1,

Fig. 3 den aus dem Bremskraftregler austretenden Teil einer Steuerwelle mit Spannschelle und einer am Bremskraftregler befestigten Schiene zum Fixieren der Steuerwelle in einer vorbestimmten Stellung und

Fig. 4 die Lagerung der Steuerwelle in einem Bremskraftreglergehäuse sowie eine am Bremskraftreglergehäuse angeordnete Einrichtung zum Fixieren der Steuerwelle in einer vorbestimmten Stellung mittels einer Kugel und eines Druckstiftes.

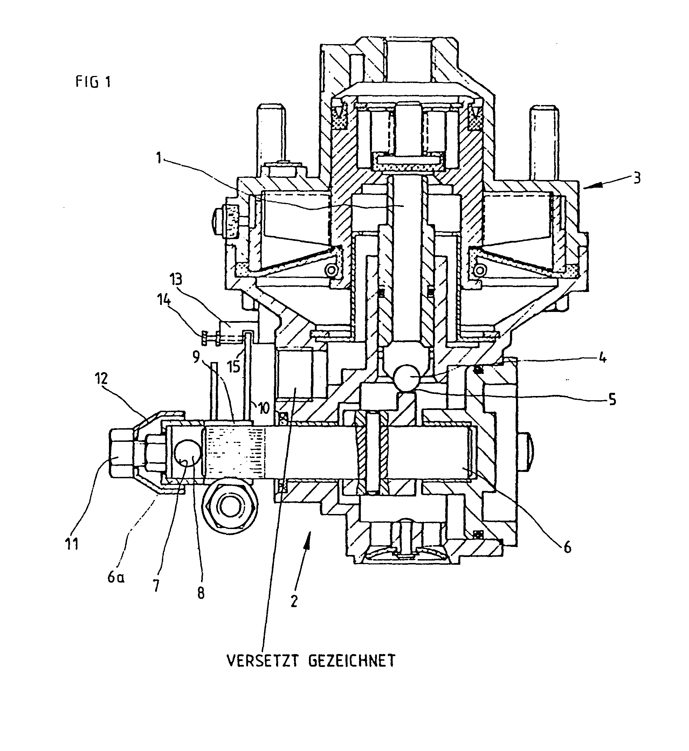

Der in der Fig. 1 gezeigte Bremskraftregler wird nur soweit beschrieben, wie es zum Verständnis der Erfindung erforderlich ist.

Ein Stössel 1, welcher in dem Bremskraftregler die lastabhängig regelnde Verbindung zwischen einem mechanischen Steuerteil 2 und einem Bremsluftteil 3 herstellt, gleitet mit seinem unteren Ende 4 auf einer Schrägfläche 5 einer Steuerwelle 6.

Die normalerweise einteilig ausgebildete Steuerwelle 6 ist in diesem Ausführungsbeispiel im Bereich ihres aus dem Gehäuse des Bremskraftreglers herausragenden Endes geteilt, und zwar derart, dass ein mit in Achsrichtung verlaufenden Schlitzen 9 versehenes rohrförmiges Steuerwellenteil 6a auf das aus dem Gehäuse des Bremskraftreglers herausragende Teil der Steuerwelle 6 aufgeschoben ist und mittels einer den mit den Schlitzen 9 versehenen Bereich des Steuerwellenteiles 6a umschliessenden Spannschelle 10 mit der Steuerwelle 6 drehfest verbunden wird. Durch Lösen der Spannschelle 10 ist ein radiales Verdrehen der beiden Steuerwellenteile 6 und 6a zueinander möglich.

Ein durch eine Bohrung 7 des Steuerwellenteiles 6a geführter Steuerhebel 8 ist an eine nicht dargestellte Verbindungsstange angelenkt, welche mit einem an einer ebenfalls nicht dargestellten Achse angebrachten Festpunkt bzw. Federungskörper eine Verbindung herstellt. Eine auf der Stirnseite des Steuerwellenteiles 6a mittels einer Schraube 11 befestigte Kappe 12 sichert mit ihrer Stirnseite den Steuerhebel 8 in der Bohrung 7 durch Festziehen der Schraube 11, wobei die stirnseitigen Anlagen der Kappe 12 an den Steuerhebel 8 entsprechend radial ausgebildet sind.

Das Gehäuse des Bremskraftreglers weist in der Nähe der Spannschelle 10 eine hakenförmige Anformung 13 auf, in die eine Gewindebohrung zur Aufnahme einer Klemmschraube 14 eingebracht ist. Ein Schenkel der Spannschelle 10 weist einen Fortsatz 15 auf der in einen von der Wand des Bremskraftreglergehäuses und der hakenförmigen Anformung 13 gebildeten Schlitz hineinragt. Beim Eindrehen der Klemmschraube 14 in die hakenförmige Anformung 13 wird der Fortsatz 15 und somit die Spannschelle 10 zwischen der Wand des Bremskraftreglergehäuses und der Klemmschraube 14 festgesetzt.

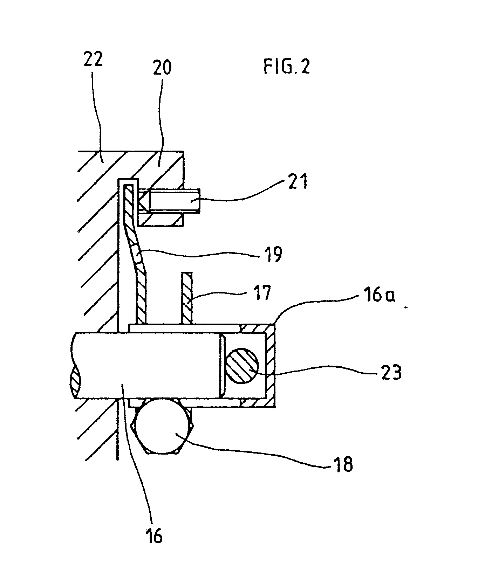

Die Fig. 2 zeigt noch einmal ausschnittsweise die Befestigung der Spannschelle auf der Steuerwelle sowie die Fixierung der Spannschelle am Bremskraftreglergehäuse.

Auf der Steuerwelle 16, 16a eines Bremskraftreglers wird eine Spannschelle mittels eines die beiden Schenkel der Spannschelle 17 miteinander verbindenden Gewindebolzens 18 gehalten.

Die Spannschelle 17 weist einen abgerundeten Fortsatz 19 auf, der in einen aus der Wand des Bremskraftreglergehäuses 22 und einer hakenförmigen Anformung 20 gebildeten Schlitz hinragt. Eine mit Gewinde versehene Durchgangsbohrung der hakenförmigen Anformung 19 dient zur Aufnahme einer Klemmschraube 21, mittels welcher die Spannschelle 17 in einer vorbestimmten Stellung fixierbar ist. Die Steuerwelle 16 ist mit einem Steuerhebel 23 verbunden.

Der Einstell- und Fixiervorgang der Steuerwelle des im vorstehenden, beschriebenen Bremskraftreglers wird nachstehend näher erläutert.

Wie eingangs bereits erwähnt, wird der beschriebene Bremskraftregler auf einem Prüfstand entsprechend der für ein bestimmtes Fahrzeug gewünschte Regeldruck eingestellt und anschliessend ohne Veränderung der Einstellung in das Fahrzeug eingebaut.

Zwecks Einstellung des Bremskraftreglers auf den für den jeweiligen Fahrzeugtyp erforderlichen Regeldruck werden die beiden Steuerwellenteile 6 und 6a mittels der Spannschelle 10 drehfest miteinander verbunden und der Steuerhebel 8 durch Anziehen der Kappe 12 mittels der Schraube 11 mit dem Steuerwellenteil 6a verspannt.

Dann wird der Steuerhebel 8 so weit verschwenkt, bis er zu der Fläche des Bremskraftreglergehäuses, welche am Fahrzeugrahmen anliegen soll, einen Winkel einnimmt, der z.B. dem Beladungszustand «Null» des Fahrzeugs entspricht. Das Verschwenken des Steuerhebels 8 bewirkt ein Verdrehen der mit der Schrägfläche 5 versehenen Steuerwelle 6, wodurch der Arbeitshub des an der Schrägfläche 5 anliegenden Stössels 1, über welchen das Bremslufteil 3 des Bremskraftreglers betätigt wird, bestimmt wird.

Nach Abschluss dieses Einstellvorgangs wird die Spannschelle 10 mittels der Klemmschraube 14 gegen die Wand des Bremskraftreglers gepresst und so die Steuerwelle 6, 6a und der mit dieser verbundene Steuerhebel 8 in der gewünschten Position gehalten.

Nach Einbau des Bremskraftreglers in das Fahrzeug wird die Klemmschraube 14 wieder gelöst, so dass die Steuerwelle 6, 6a mittels des Steuerhebels 8 und des mit diesem verbundenen an der Fahrzeugachse angelenkten Gestänges entsprechend der Fahrzeugbeladung verstellt werden kann.

Die Klemmschraube 14 ist so ausgebildet, dass sie beim Festklemmen der Spannschelle 10 eine Markierung auf der Spannschelle 10 hinterlässt, welche z.B. nach der Durchführung von Wartungsarbeiten am Bremskraftregler ein erneutes Einstellen des Bremskraftreglers ohne Zuhilfenahme von Prüfeinrichtungen ermöglicht.

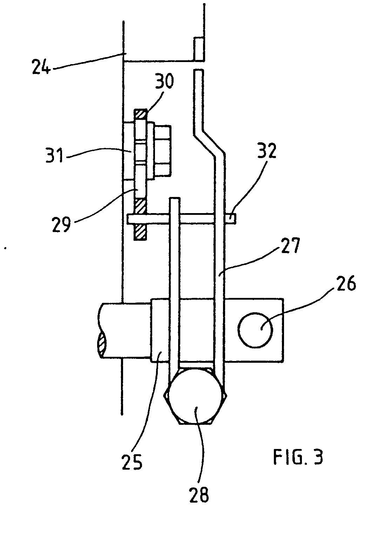

Die Fig. 3 zeigt den aus dem Bremskraftregler austretenden Teil einer Steuerwelle mit Spannschelle und einer am Bremskraftregler befestigten Schiene zum Fixieren der Steuerwelle in einer vorbestimmten Stellung.

In der Abbildung ist das aus einem Gehäuse 24 eines Bremskraftreglers herausragende Teil einer Steuerwelle 25 mit einem Steuerhebel 26 dargestellt. Auf der Steuerwelle 25 ist eine Spannschelle 27 mittels eines die beiden freien Schenkel der Spannschelle 27 verbindenden Gewindebolzens 28 verdrehsicher befestigt. Eine mit einem Langloch 29 versehene Schiene 30 ist einerseits mittels eines sowohl die Spannschelle 27 als auch die Schiene 30 durchdringenden Stiftes 32 lösbar mit der Spannschelle 27 verbunden und andererseits mittels einer durch das Langloch 29 der Schiene 30 geführten Klemmschraube 31 am Bremskraftreglergehäuse 24 befestigt.

Zwecks Einstellung des Bremskraftreglers wird die Klemmschraube 31 gelöst und der Stift 32 entfernt. Durch Verschwenken des Steuerhebels 26 und somit entsprechenden Verdrehen der Steuerwelle 25 wird der Bremskraftregler auf den gewünschten Regeldruck eingestellt.

Anschliessend wird die Schiene 30 durch entsprechendes Verschieben in eine Position gebracht, in welcher sich die zur Aufnahme des Stiftes 32 in der Spannschelle 27 befindliche Bohrung mit der in der Schiene angeordneten Bohrung deckt und die Verbindung zwischen Schiene 30 und Spannschelle 27 mittels des Stiftes 32 herstellt.

Dann wird die Schiene 30 durch Festdrehen der Klemmschraube 31 in dieser Lage fixiert.

Die durch diesen Vorgang erzielte starre Verbindung zwischen der Steuerwelle 25, der Spannschelle 27, der Schiene 30 und dem Bremskraftreglergehäuse 24 gewährleistet, dass sich die Einstellung des Bremskraftreglers beim Transport und bei Montage in das Fahrzeug nicht verändern kann.

Nach dem Einbau des Bremskraftreglers in das Fahrzeug wird der Stift 32 aus der Halteeinrichtung (Klemmschraube 31, Schiene 30, Spannschelle 27) entfernt, so dass die Steuerwelle 25 über den Steuerhebel 26 und das mit diesem verbundene, am Fahrzeug angeordnete Gestänge entsprechend der Beladung des Fahrzeugs verdreht werden kann.

Soll die Einstellung des Bremskraftreglers einmal überprüft oder auch korrigiert werden, so ist lediglich ein-zur-Deckung-bringen der in der Spannschelle 27 angeordneten Bohrung mit der in der Schiene 30 vorgesehenen Bohrung, welche zur Aufnahme des Stiftes 32 dienen, erforderlich.

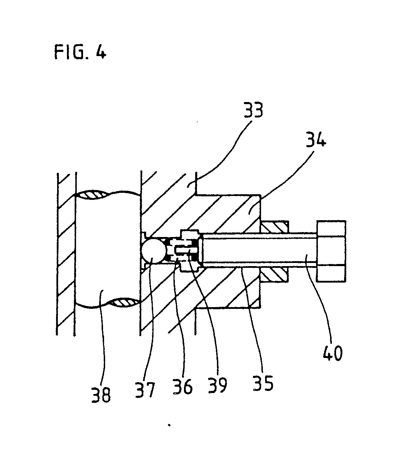

Die Fig. 4 zeigt die Lagerung der Steuerwelle in einem Bremskraftreglergehäuse sowie eine am Bremskraftreglergehäuse angeordnete Einrichtung zum Fixieren der Steuerwelle in einer vorbestimmten Stellung.

Ein Bremskraftreglergehäuse 33 weist in der Nähe der Steuerwellenlagerung eine senkrecht zur Steuerwellenachse angeordnete zylindrische Befestigungseinheit 34 auf, die in axialer Richtung von einer stufenförmigen Durchgangsbohrung 35 durchdrungen wird. In der Durchgangsbohrung 35 ist eine von einer Druckfeder 36 beaufschlagte Kugel 37 gelagert, und zwar derart, dass sie an der Steuerwelle 38 anliegt. Die Durchgangsbohrung ist teilweise mit Gewinde versehen, in welches ein mit einem Dorn 39 ausgestatteter Gewindestift 40 eingeschraubt ist.

Diese Fixiervorrichtung arbeitet derart, dass nach Einstellung der Steuerwelle 38 der Gewindestift 40 in die Durchgangsbohrung 35 weiter hineingedreht wird und so die Kugel 37 gegen die Steuerwelle 38 gepresst wird. Durch diesen Anpressvorgang entsteht in der Steuerwelle 38 ein Markierungseindruck, der mit der federbelasteten Kugel 37 bei der Kontrolle der Einstellung der Steuerwelle 38 eine leichte Rastverbindung eingeht.

Die Druckfeder 36 ist so bemessen, dass die Kugel bei gelöstem Gewindestift 40 drucklos an der Steuerwelle 38 anliegt.

## Patentansprüche

1. Vorrichtung zum Justieren eines mechanisch gesteuerten lastabhängigen Bremskraftreglers für druckmittelbetätigte Bremsanlagen in Motorfahrzeugen und Anhängerfahrzeugen mit folgenden Merkmalen:

a) es ist ein mit einer Verntileinrichtung zusammenwirkendes Stellglied (1) vorgesehen;
b) es ist eine Steuerwelle (6, 6a) vorgesehen, mittels welcher das Stellglied betätigbar ist, derart, dass die Drehbewegung der Steuerwelle in eine lineare Bewegung des Stellgliedes umgewandelt wird;
c) zur Umwandlung des beladungsabhängigen Hubes eines Fahrzeugteils in diese Drehbewegung der Steuerwelle ist ein Gestänge vorgesehen;

dadurch gekennzeichnet, dass am Gehäuse (22, 24, 33) des Bremskraftreglers zwecks Anpassens des Gestänges an eine vorbestimmbare Einbaustellung der Steuerwelle eine Einrichtung (13, 14, 15; 19, 21; 29 bis 32; 34 bis 40) zum Fixieren der Steuerwelle in dieser Einbaustellung vorgesehen ist.

2. Vorrichtung nach Anspruch 1, gekennzeichnet durch die folgenden Merkmale:

a) die Steuerwelle ist mit einem im wesentlichen senkrecht zur Achse der Steuerwelle angeordneten Befestigungsarm versehen;
b) es sind lösbare Befestigungsmittel zur Befestigung des freien Endes des Befestigungsarmes am Gehäuse vorgesehen.

3. Vorrichtung nach Anspruch 2, dadurch gekennzeichnet, dass der Befestigungsarm als eine lösbar an der Steuerwelle befestigbare Spannschelle (10) ausgebildet ist.

4. Vorrichtung nach Anspruch 2, gekennzeichnet durch die folgenden Merkmale:

a) die Befestigungsmittel bestehen aus einem an einer bestimmten Stelle des Gehäuses des Bremskraftreglers befestigbaren Befestigungsteil (13, 14);
b) der Befestigungsarm ist so ausgebildet, dass er innerhalb eines vorgegebenen Bereiches der Drehbewegung der Steuerwelle mittels des Befestigungsteiles am Gehäuse fixierbar ist.

5. Vorrichtung nach wenigstens einem der vorhergehenden Ansprüche, dadurch gekennzeichnet, dass das Befestigungsteil als Klemmschraube (14) ausgebildet ist.

6. Vorrichtung nach wenigstens einem der vorhergehenden Ansprüche, dadurch gekennzeichnet, dass das Befestigungsteil als Stift (32) ausgebildet ist.

7. Vorrichtung nach wenigstens einem der vorhergehenden Ansprüche, dadurch gekennzeichnet, dass der Befestigungsarm Mittel zur Befestigung des Gestänges am Bremskraftregler aufweist.

8. Vorrichtung nach Anspruch 7, dadurch gekennzeichnet, dass die Mittel zur Befestigung des Gestänges am Bremskraftregler derart ausgebildet sind, dass die Befestigungslage des Gestänges zur Steuerwelle veränderbar ist.

9. Vorrichtung nach Anspruch 1, gekennzeichnet durch die folgenden Merkmale:

a) die Einrichtung zum Fixieren der Steuerwelle weist eine mit einer stufenförmigen Durchgangsbohrung (35) versehene Befestigungseinheit (34) auf;
b) in der Durchgangsbohrung (35) ist eine von einer Druckfeder (36) beaufschlagte Kugel (37) gelagert, welche mittels eines in die Durchgangsbohrung (35) eingeschraubten Gewindestiftes (40) gegen die Steuerwelle (38) anpressbar ist.

## Claims

1. Device for adjusting a mechanically controlled, load-dependent brake pressure regulator for pressure medium-actuated brake systems in motor vehicles and trailer vehicles having the following features:

a) an adjusting member (1) co-operating with a valve arrangement is provided;
b) a control shaft (6, 6a) is provided by means of which the adjusting member can be actuated, in such a manner that the rotational movement of the control shaft is converted into a linear movement of the adjusting member;
c) for the conversion of the load-dependent travel of a vehicle part into this rotational movement of the control shaft, a linkage is provided;

characterised in that, for the purpose of adapting the linkage to a predeterminable installation position of the control shaft, an arrangement (13, 14, 15; 19, 21; 29 to 32; 34, 40) for fixing the control shaft in this installation position is provided at the housing (22, 24, 33) of the brake pressure regulator.

2. Device according to claim 1, characterised by the following features:

a) the control shaft is provided with a fixing arm that is arranged substantially perpendicular to the axis of the control shaft;
b) detachable fixing means are provided for fixing the free end of the fixing arm to the housing.

3. Device according to claim 2, characterised in that the fixing arm is constructed in the form of a tension clamp (10) that can be detachably fixed to the control shaft.
4. Device according to claim 2, characterised by the following features:

a) the fixing means comprise a fixing part (13, 14) that can be fixed to a particular place on the housing of the brake pressure regulator;
b) the fixing arm is constructed such that it can be fixed to the housing within a given range of the rotational movement of the control shaft by means of the fixing part.

5. Device according to at least one of the preceding claims, characterised in that the fixing part is constructed in the form of a locking screw (14).
6. Device according to at least one of the preceding claims, characterised in that the fixing part is constructed in the form of a pin (32).
7. Device according to at least one of the preceding claims, characterised in that the fixing arm has means for fixing the linkage to the brake pressure regulator.
8. Device according to claim 7, characterised in that the means for fixing the linkage to the brake pressure regulator is constructed in such a manner that the fixing position of the linkage to the control shaft can be altered.
9. Device according to claim 1, characterised by the following features:

a) the arrangement for fixing the control shaft has a fixing unit (34) provided with a through bore-hole (35) which is stepped;
b) there is mounted in the through bore-hole (35) a ball (37) on which a pressure spring (36) acts and which can be pressed against the control shaft (38) by means of a set screw (40) screwed into the through bore-hole (35).

**Revendications**

1. Dispositif pour ajuster un régulateur à commande mécanique pour régler l'effort de freinage en fonction de la charge sur des véhicules automobiles et des remorques avec des installations de freinage actionnées par un fluide de pression, le régulateur ayant les particularités suivantes:

a) il comprend un élément de réglage (1) agissant sur un robinet;
b) il comprend un axe de commande (6, 6a) qui agit sur l'élément de réglage en ce sens qu'une rotation de l'axe de commande est transformée en un mouvement linéaire de l'élément de réglage;

c) une timonerie est prévue pour transformer le déplacement d'une partie de véhicule en fonction de la charge en un mouvement de rotation de l'axe de commande, caractérisé en ce que, en vue de l'adaptation de la timonerie à une position de montage préfixée de l'axe de commande, un dispositif (13, 14, 15; 19, 21; 29 à 32; 34, 37, 39, 40) pour bloquer l'axe de commande à cette position de montage est prévu sur le corps (22, 24, 33) du régulateur d'effort de freinage.

2. Dispositif selon la revendication 1, caractérisé en ce que:

a) l'axe de commande est pourvu d'un bras de blocage qui est essentiellement perpendiculaire à cet axe;
b) des moyens de fixation détachables sont prévus pour fixer l'extrémité libre du bras de blocage au corps de régulateur.

3. Dispositif selon la revendication 2, caractérisé en ce que le bras de blocage est constitué par un collier de serrage (10) fixé amovible sur l'axe de commande.
4. Dispositif selon la revendication 2, caractérisé en ce que:

a) les moyens de fixation sont constitués par un organe de fixation (13, 14) prévu à un endroit déterminé du corps de régulateur;
b) le bras de blocage est réalisé de manière qu'il puisse être fixé sur le corps de régulateur par l'organe de fixation dans une plage préfixée du mouvement de rotation de l'axe de commande.

5. Dispositif selon au moins une des revendications précédentes, caractérisé en ce que l'organe de fixation est une vis de serrage (14).
6. Dispositif selon au moins une des revendications précédentes, caractérisé en ce que l'organe de fixation est une goupille (32).
7. Dispositif selon au moins une des revendications précédentes, caractérisé en ce que le bras de blocage présente des moyens pour attacher la timonerie au régulateur d'effort de freinage.
8. Dispositif selon la revendication 7, caractérisé en ce que les moyens pour fixer la timonerie au régulateur sont réalisés de manière que la position de fixation de la timonerie par rapport à l'axe de commande soit variable.
9. Dispositif selon la revendication 1, caractérisé en ce que:

a: le dispositif pour bloquer l'axe de commande est constitué par une unité de blocage (34) présentant un perçage étagé traversant (35);
b) ce perçage (35) contient une bille (37) qui est chargée par un ressort de compression (36) et qui est susceptible d'être pressée contre l'axe de commande (38) par une vis de pression (40) vissée dans le perçage (35).

FIG 1

VERSETZT GEZEICHNET

FIG. 2

FIG. 3

FIG. 4